# FASCICULE DE BREVET EUROPEEN

(11) **EP 2 491 420 B1**
(45) Date de publication et mention de la délivrance du brevet: **17.12.2014**
(21) Numéro de dépôt: 10770813.3
(22) Date de dépôt: 25.10.2010
(51) Int. Cl.: G01S 13/87, G01S 13/00

(54) **ARCHITECTURE DE SYSTEME DE DEFENSE AERIENNE COMBINANT DES RADARS PASSIFS ET DES RADARS ACTIFS**
LUFTABWEHRSYSTEM MIT EINER KOMBINATION AUS PASSIVRADAR UND AKTIVRADAR
AIR DEFENSE SYSTEM ARCHITECTURE COMBINING PASSIVE RADARS AND ACTIVE RADARS

(30) Priorité: 23.10.2009 FR 0905113
(43) Date de publication de la demande: 29.08.2012
(73) Titulaire: Thales, 92200 Neuilly Sur Seine (FR)
(72) Inventeur: ALLAM, Sébastien, F-92160 Antony (FR)
(74) Mandataire: Lucas, Laurent Jacques
(86) Numéro de dépôt international: PCT/EP2010/066076
(87) Numéro de publication internationale: WO 2011/048225

(56) Documents cités:
- EP-A1- 1 942 351
- FR-A1- 2 909 773
- US-A1- 2008 088 508
- US-B1- 6 424 290

## Description

L'invention se rapporte au domaine de la détection radar. Elle traite plus particulièrement des réseaux de radars mis en oeuvre de façon à réaliser la couverture radar d'une zone donnée.

L'utilisation de radars actifs multifonctions pour réaliser la couverture d'une zone de l'espace conduit généralement à tenter de déterminer comment doivent êtres enchainées les différentes tâches réalisées par le ou les radars chargés de couvrir cette zone, à savoir les tâches de veille panoramique, les tâches de confirmation de détection d'une cible et les tâches spécifiques d'analyse des paramètres des cibles détectées (poursuite). Généralement encore, la réalisation des différentes tâches conduit à un arbitrage qui selon les cas, le nombre de cibles détectées, est réalisé au détriment de l'une ou l'autre tâche en fonction du degré de priorité de chacune d'elles. Ainsi, dans un environnement dense, les tâches de veille sont bien souvent espacées dans le temps de façon à favoriser l'exécution d'une tâche de confirmation ou de poursuite. De même des tâches de veille programmées pour un instant donné compte-tenu de la direction pointée par le radar peuvent être purement et simplement supprimées faute de temps. Dans un tel contexte, la multiplication des équipements radars actifs pour surveiller un même zone, ou plus exactement différents secteurs d'une même zone, outre le fait qu'elle constitue une solution onéreuse, n'est cependant pas toujours satisfaisante sachant que dans un tel arrangement chaque équipement radar garde un fonctionnement autonome qui ne tient en général pas compte de la situation globale, celle-ci étant généralement traitée de manière différée par un centre de commandement qui réalise la fusion des données transmises par les différents radars.

Un document US 2008/088508 A1 divulgue un système de surveillance radar comportant un radar passif (PCL).

Un document EP 1 942 351 A1 divulgue un système de surveillance de cibles.

Un but de l'invention est de proposer une solution permettant de tirer pleinement parti de l'association de plusieurs radars actifs à un ou plusieurs radars passifs pour effectuer une mission de surveillance/défense d'une zone donnée de l'espace.

A cet effet l'invention a pour objet un système de surveillance radar du type comportant un radar passif utilisant des émetteurs d'opportunité et une pluralité de radars actifs qui coopèrent sous la forme d'une coalition pour assurer la surveillance d'une zone de l'espace, le radar passif et les radars actifs comportant des moyens pour échanger des informations. Le radar passif est configuré pour adopter deux modes de fonctionnement alternatifs:
- un mode "veille" selon lequel le radar passif réalise une surveillance de la zone de l'espace considérée et élabore des informations de détection relatives aux objets évoluant dans la zone surveillée;
- un mode "fourniture de données à la demande" selon lequel le radar passif réalise sur requête d'un ou plusieurs radars actifs, une recherche d'objet dans un secteur donné de la zone surveillée, ou une analyse de certaines caractéristiques du signal reçu dans un secteur donné défini par des valeurs de distance, de vitesse et d'azimut; les données élaborées par le radar passif consécutivement à une requête étant transmises à celui ou ceux des radars actifs auteurs de cette requête.

Selon l'invention, le radar passif comporte des moyens configurés pour gérer la mise en oeuvre au cours du temps des deux modes de fonctionnement alternatifs, le passage du mode "veille" au mode "fourniture de données à la demande" étant induit par la transmission d'une requête de données par un des radars actifs, et par la nature et le degré de priorité de la requête émise; le mode "veille" constituant le mode de fonctionnement par défaut, en l'absence de requête, du radar passif.

Selon un mode de réalisation préféré, le système selon l'invention, comporte des moyens pour réaliser un ordonnancement temporel optimal des opérations correspondant aux requêtes transmises par les radars actifs.

Selon un mode de réalisation préféré du système selon l'invention, chaque radar actif comporte des moyens pour déterminer, compte tenu de l'instant optimal d'exécution de la tâche objet d'une requête transmise au radar passif, la durée du préavis nécessaire qui doit accompagner la transmission de la requête pour que le radar passif puisse exécuter la tâche demandée à l'instant optimal. La durée du préavis prend en compte le temps nécessaire pour transmettre la requête compte tenu de la nature des moyens de communication qui relie le radar passif aux radars actifs.

Selon un mode de réalisation préféré du système selon l'invention, l'ensemble des radars formant le système comporte des moyens pour prendre en compte une date et une référence de temps communes.

Selon une forme préférée de mise en oeuvre du système selon l'invention, les requêtes transmises par un radar actif, sont de deux types:
- les requêtes de recherche, requérant la recherche par le radar passif de nouvelles cibles dans un secteur donné répondant à des critères donnés de position et de vitesse;
- les requêtes d'analyse, requérant la mesure par le radar passif de grandeurs particulières, dans un domaine spatial restreint défini par une position centrale accompagnée de l'incertitude sur cette position, ainsi que par une étendue selon les différentes directions de l'espace.
les requêtes transmises sont accompagnées de l'instant pour lequel la tâche demandée doit être réalisée.

Selon une forme préférée de mise en oeuvre du système selon l'invention, le radar passif est configuré pour, dans le fonctionnement en mode "veille", transmettre aux radars actifs de la coalition les informations élaborées à partir des détections opérées par ses soins.

Grâce à la mise en oeuvre de l'architecture selon l'invention chacun des radars actifs associés pour couvrir une zone de l'espace, peut disposer d'informations complémentaires, fournies par un ou plusieurs radars passifs, lui permettant de mieux assurer sa mission.

Les caractéristiques et avantages de l'invention seront mieux appréciés grâce à la description qui suit, description qui expose l'invention au travers d'un mode de réalisation particulier pris comme exemple non limitatif et qui s'appuie sur les figures annexées, figures qui représentent:
- la figure 1, un schéma synoptique représentant un système mettant en oeuvre l'architecture selon l'invention;
- la figure 2, un synoptique illustrant l'agencement des opérations en mode "fourniture de données à la demande";
- la figure 3, une illustration du principe de gestion temporelle des requêtes transmises par les radars actifs.

L'idée sur laquelle est basée l'invention consiste à améliorer les performances d'un réseau de radars actifs par ajout de senseurs passifs fonctionnant sur des émissions d'opportunités continues (CW) telles que des émissions de radiodiffusion. Selon l'invention un radar passif est ajouté à un ensemble de radars actifs et est configuré pour apporter un support efficace dans leur mission de surveillance/défense dans la zone de l'espace qu'ils ont à leur charge. L'ajout d'un radar passif à un ensemble de radars actifs a pour objet de permettre soit un complément de couverture de la zone considérée, soit, plus avantageusement, un renforcement de la couverture.

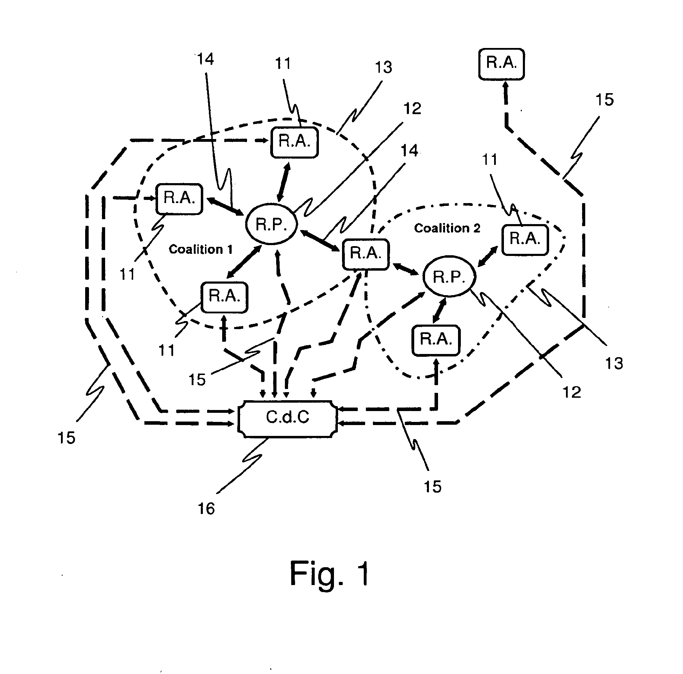

Selon l'invention les radars actifs 11 (R.A.) qui forment le réseau destiné à couvrir la zone considérée sont, comme l'illustre la figure 1, associés par groupes, chaque groupe étant lui-même associé à un radar passif 12 (R.P.) et formant avec lui une coalition 13, c'est-à-dire un ensemble de radars partageant un même objectif de couverture. Dans une coalition 13, le radar passif 12 est en liaison directe 14 avec chacun des radars actifs 11 de la coalition séparément. Cette liaison est représentée par des flèches en traits plein sur la figure1. Par ailleurs, il est également en liaison 15 avec le Centre de Commandement 16, ou CdC, qui gère une (ou plusieurs) coalition(s) 13 donnée(s). De plus il est normalement localisé à un emplacement judicieusement choisi, différent des emplacements des autres radars.

De manière générale, l'architecture selon l'invention se caractérise par un jeu d'échanges particulier entre le radar passif et les radars actifs de la coalition à laquelle il appartient. A cet effet chaque radar actif, comporte des moyens de liaison lui permettant de communiquer avec le radar passif. Inversement le radar passif comporte des moyens pour communiquer avec chacun des radars actifs. Par ailleurs tous les équipements associés au CdC comportent des moyens pour échanger des informations avec celui-ci.

A travers ces échanges, le radar passif se comporte pour chacun des radars actifs, ainsi que pour le CdC, comme une source d'informations exogènes fournissant des données de détection complémentaires. La fourniture d'informations et le type d'informations fournies à un radar actif varie ici en fonction des besoins exprimés par ce radar actif au travers de requêtes transmises au radar passif.

Selon l'invention, le radar passif dispose de deux modes de fonctionnement:
- un mode primaire, dit de "veille", suivant lequel le radar passif réalise une mission de surveillance sur tout son domaine instrumenté, mission qui inclut un rafraichissement régulier de son domaine de couverture. Le rafraîchissement ne se produit cependant pas nécessairement à cadence fixe;
- un mode dit de " fourniture de données à la demande" suivant lequel le radar passif réalise, à la demande d'un ou de plusieurs radars actifs des analyses dans des secteurs d'intérêt, définis par des valeurs de paramètres de distance, de vitesse et d'azimut. Selon la nature de la demande, l'analyse peut être réalisée avec différents niveaux de détail, différents degrés de précision.

Par défaut, en l'absence de toute demande particulière émanant de l'un ou l'autre des radars actifs de la coalition, ou encore du CdC, le radar passif est en mode de "veille". Le mode de "fourniture de données à la demande" est quant à lui mis en oeuvre lorsque des requêtes sont formulées et transmises au radar passif.

Les instants de commutation d'un mode à l'autre sont fonctions de la nature et de l'urgence des requêtes formulées. Par ailleurs, la gestion des priorités des différentes taches d'analyse demandées par les radars actifs est réalisée en fonction de la nature et du degré de priorité attribué par le radar passif à ces requêtes.

Par suite le fonctionnement d'ensemble des échanges entre les différents éléments de l'architecture présente les caractéristiques suivantes:

Chaque radar actif de la coalition peut accéder de manière permanente aux informations de détection élaborées par le radar passif lorsqu'il est en mode "veille". Cette possibilité est également offerte au CdC qui dialogue avec le radar passif via une liaison 15 de commande et de contrôle et de collecte des données, liaison représentée sur la figure 1 par des flèches en traits discontinus. Chaque radar actif 11 de la coalition qui en fait la demande reçoit alors régulièrement les résultats de la surveillance effectuée par le radar passif 12. Par suite, selon l'invention, ce mode d'échange est défini de façon à ne demander aucune action particulière au radar passif 12 qui se trouve dans ce cas en mode "veille".

L'accès aux données de détection élaborées par le radar passif 12 peut avantageusement permettre à un radar actif de confirmer certaines pistes dans un délai plus court que s'il ne disposait pas de ces informations. Ainsi, dans le cas d'un radar actif effectuant seulement de la veille, l'accès à ces données de détection complémentaires permet de réaliser soit une initialisation soit une confirmation de piste dans le même tour d'antenne que celui pour lequel la première détection a été réalisée.

De manière analogue, dans le cas d'un radar multifonctions, cet accès à des données de détection complémentaires permet de réaliser la confirmation d'une détection sans avoir à mettre en oeuvre de pointage de confirmation, consommateur de temps.

Le protocole d'échange entre le radar passif 12 et les différents radars actifs 11 de la coalition considérée 13, est défini de façon à ce que chaque radar actif de la coalition puisse, quand le besoin s'en fait sentir, transmettre de manière asynchrone des requêtes d'information au radar passif, ces requêtes portant sur l'analyse de certaines zones d'intérêt, définies géographiquement, dynamiquement (aspect vitesse) et temporellement.

Le séquencement du radar passif 12 est quant à lui défini de façon à réaliser, lorsque des requêtes lui sont transmises par des radars actifs, un traitement optimal de ces dernières. Ce traitement est réalisé dans le cadre d'un fonctionnement en mode de "fourniture de données à la demande", durant lequel le radar passif transmet les résultats de son analyse soit au radar actif 11 à l'origine de la requête, pour des requêtes du type recherche de cible par exemple, soit au CdC 16, par exemple s'il s'agit d'une mesure simplement destinée par exemple à être fusionnée au niveau centre pour améliorer la qualité de pistage; soit encore aux deux simultanément.

Pour rendre un tel fonctionnement possible, les différents éléments constituant l'architecture d'une coalition, le radar passif 12 et les radars actifs 11 comporte des moyens configurés pour permettre à chaque élément de disposer d'une base de temps commune à tous. Cette base de temps commune peut par exemple être créée, gérée et diffusée par le Centre de Commandement (CdC) 16.

Par ailleurs les radars actifs sont configurés de façon à être en mesure de transmettre des requêtes avec un préavis minimum, préavis garantissant que le radar passif recevra une requête suffisamment tôt pour être en mesure de traiter cette requête en temps voulu. Ce préavis, tient notamment compte des capacités (débit, réactivité) de la liaison 14 entre le radar actif 11 et le radar passif 12. En outre, chaque radar actif est configuré pour que son séquencement prenne en compte l'impact de ce préavis dans l'ordonnancement des pointages exécutés, les requêtes de pointages exécutées par un radar passif devant pour cela être établi au plutôt et ne pas trop glisser temporellement.

Selon l'invention, le radar passif est configuré pour fonctionner préférentiellement selon un mode d'acquisition continu. De la sorte il est avantageusement capable d'acquérir en continu des données radar, sous forme complexe (données I et Q), et de les transmettre, si besoin, aux unités chargées de réaliser le traitement.

Par ailleurs, les données de détection élaborées par le radar passif 12 étant par nature des données référencées dans un repère bistatique, chaque radar actif 11 est pourvu de moyens de pistage capables d'intégrer ces données bistatiques aux données de détection élaborées par le radar actif 11 lui-même, données exprimées dans un repère cartésien, élaborées par ses propres moyens de détection. A cet effet les radars actifs 11 disposent de moyen pour mettre en oeuvre un algorithme de pistage capable de traiter des données bistatiques délocalisées.

Selon l'invention également, les requêtes envoyées par les radars actifs 11 au radar passif 12 sont de deux natures. On distingue ainsi les requêtes de recherche et les requêtes d'analyse proprement dites.

Les requêtes de recherche sont destinées, comme leur nom l'indique, à rechercher de nouvelles cibles dans une région donnée et répondant en particulier à des critères donnés de position et de vitesse. Le radar passif 12 satisfait ces requêtes en transmettant au radar actif 11 auteur d'une telle requête toutes les détections bistatiques réalisées dans la zone d'intérêt et répondant aux critères. Les détections peuvent être transmises sous-différentes formes, sous forme brute (plots bistatiques élaborés par les différentes bases bistatiques exploitées par le radar passif) par exemple, ou bien, dans le cas où les cibles sont détectées par plusieurs bases bistatiques simultanément, sous forme de plots cartésiens obtenus par fusion des plots bistatiques élaborés par chacune des bases.

Les requêtes d'analyse sont destinées à collecter des informations particulières sur une cible désignée. Le radar passif 12 satisfait ces requêtes en transmettant au radar actif 11, auteur d'une telle requête, les valeurs des attributs des détections bistatiques associées à la cible désignée auxquels peuvent s'ajouter des attributs Doppler, si le radar passif 12 dispose des moyens et du temps disponible pour réaliser une analyse Doppler.

Par suite chaque requête de recherche transmise par un radar actif 11 comporte des informations permettant au radar passif 12 de localiser la zone d'intérêt. Ces informations peuvent par exemple consister en la position selon les trois dimensions de l'espace du centre de la zone d'intérêt, exprimée dans un repère géographique de référence, associée à une information définissant l'étendue de la zone autour de son centre. Elle comporte également une information relative à l'instant pour lequel la mesure doit être idéalement réalisée, cet instant étant défini par rapport à la référence temporelle commune évoquée précédemment.

Chaque requête d'analyse comporte quant à elle des informations définissant la position, selon les trois dimensions de l'espace, de la cible à analyser, accompagnée de l'incertitude sur cette position, ainsi que l'instant pour lequel la mesure doit être idéalement réalisée. Elle comporte en outre une information définissant la liste des attributs particuliers à mesurer (spectre Doppler, Raies symétriques, Image, etc... en fonction des moyens de traitement et du temps disponible dont dispose le radar passif).

Comme il a été dit précédemment, le radar passif 12, tel qu'il est mis en oeuvre dans l'architecture selon l'invention, est configuré pour fonctionner suivant deux modes de fonctionnement, un mode "veille" et un mode "fourniture de données à la demande". Selon la puissance de calcul dont dispose le radar passif 12, celui-ci est configuré pour mettre en oeuvre ces deux modes soit alternativement, soit simultanément. Ainsi, lorsque la puissance de calcul disponible le permet ou bien lorsque le nombre de requêtes est faible, on privilégie une mise en oeuvre simultanée. Une partie de la puissance de calcul est alors mobilisée pour maintenir une certaine cadence de renouvellement des informations de veille, le reste de la puissance de calcul étant utilisé pour prendre en compte et satisfaire les requêtes externes.

Selon l'invention, le mode de veille du radar passif 12 est un mode de veille radar classique qui se compose de trois phases.

La première phase consiste à effectuer périodiquement l'acquisition du signal reçu par le radar. Cette acquisition est réalisée sur un intervalle de temps T_{Coh} défini par ailleurs.

La deuxième phase consiste à réaliser un traitement du signal reçu visant à la détection des cibles potentielles sur la zone instrumentée définie par un intervalle de distance, un intervalle de vitesse. La phase de détection donne lieu de manière connue à l'élaboration d'informations de détection qui prennent la forme de plots bistatiques.

La troisième phase, optionnelle, consiste quant à elle à réaliser le traitement des données de détection, des plots bistatiques, et à opérer la localisation des cibles détectées et à en déterminer l'évolution (fonction de pistage), les positions successives d'une cible étant définies dans un repère cartésien centré sur la radar passif.

Ces trois phases sont ici répétées indéfiniment tant que le mode de veille est activé. Cependant elles ne sont pas nécessairement répétées avec une cadence régulière.

Les informations de détection élaborées par le radar passif 12 lorsqu'il fonctionne suivant une mode "veille", plots bistatiques ou pistes cartésiennes, peuvent être, selon les cas de fonctionnement, transmises au Centre de Commandement (CdC) qui les traite conjointement avec les informations de détection transmises par les radars actifs 11, ou bien aux radars actifs 11 de la coalition 13 qui en ont fait la demande.

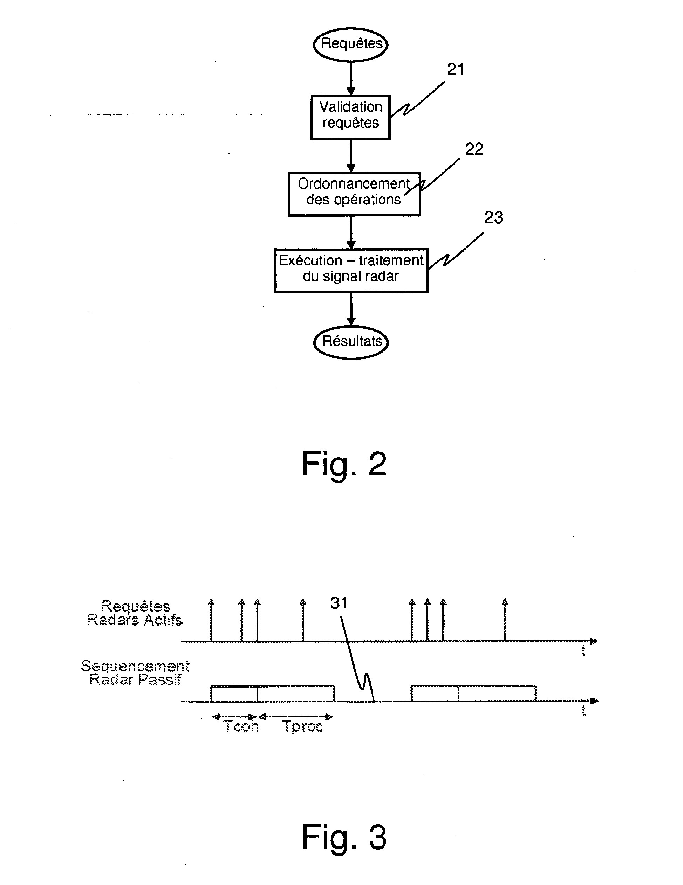

Selon l'invention encore, dans le mode de "fourniture de données à la demande" du radar passif 12, les requêtes formulées par un radar actif 11 sont analysées de façon à optimiser, comme l'illustre la figure 2, le séquencement du radar passif 12. Pour ce faire, on procède comme suit.

En premier lieu 21, on procède à une mise à l'écart des requêtes portant sur des zones d'intérêt totalement hors couverture du radar passif, ces zones étant, par exemple, déterminées à partir d'un calcul de probabilité de détection. De la même façon, on écarte les requêtes présentant un préavis trop court, compte tenu des requêtes déjà transmises et éventuellement des priorités associées aux diverses requêtes.

La liste des requêtes validées (i.e. non écartées) est ensuite transformée par l'unité de gestion du radar passif en une ou plusieurs requêtes de traitement passif, chaque requête étant caractérisée par les paramètres suivants:
- la durée d'intégration, T_{coh}, adaptée au type de cible et à la portée souhaitée,
- l'instant de début de période d'analyse, T_{d}. L'optimisation de l'enchainement des réponses aux requêtes transmises par les différents radars actifs, a pour objet de déterminer, pour les différentes requêtes, les instants d'analyse permettant de satisfaire au mieux un maximum de requêtes. Cette optimisation est réalisée en tenant compte de la durée du traitement cohérent, T_{coh}, de la durée nécessaire au traitement des données, T_{proc}, et de la puissance de calcul disponible.
- la liste des zones bistatiques d'intérêt, construite à partir des requêtes à satisfaire pendant l'intervalle de temps T_{coh}. Chaque zone est ici caractérisée par :
- une direction de pointage,
- un domaine "distance bistatique / vitesse bistatique" à instrumenter,
- un seuil de détection.
- un jeu d'émetteurs à utiliser (suivant la nature et les capacités du senseur passif déployé).

A l'aide des ces caractéristiques l'unité de gestion du radar passif définit l'ordonnancement temporel 22 des opérations d'exécution des différentes requêtes validées, comme l'illustre le chronogramme 31 de la figure 3.

Puis le radar passif 12 procède au traitement 23 du signal reçu conformément aux tâches requises. Par suite, les résultats correspondant au traitement des requêtes émises sont transmis aux radars actifs à l'origine de ces requêtes.

Il est à noter qu'en ce qui concerne le mode de fonctionnement du radar passif, dans le cadre de l'architecture selon l'invention, il est possible d'imaginer une solution alternative, adaptée à un radar passif disposant d'une cadence de renouvellement élevée, pour laquelle l'optimisation de l'ordonnancement de l'exécution des requêtes se simplifie. Il n'y a plus, dans ce cas, besoin d'optimiser les instants de début d'analyse pour être en mesure de satisfaire toutes les requêtes d'analyse "simple" émises par les différents radars actifs, seules les requêtes d'analyse fines nécessiteront une optimisation.

## Revendications

1. Système de surveillance radar du type comportant un radar passif (12) utilisant des émetteurs d'opportunité et une pluralité de radars actifs (11) qui coopèrent sous la forme d'une coalition (13) pour assurer la surveillance d'une zone de l'espace, le radar passif (12) et les radars actifs (11) comportant des moyens pour échanger des informations (14), **caractérisé en ce que** le radar passif (12) est configuré pour adopter deux modes de fonctionnement alternatifs:
- un mode "veille" selon lequel le radar passif (12) réalise une surveillance de la zone de l'espace considérée et élabore des informations de détection relatives aux objets évoluant dans la zone surveillée;
- un mode "fourniture de données à la demande" selon lequel le radar passif (12) réalise sur requête d'un ou plusieurs radars actifs (11), une recherche d'objet dans un secteur donné de la zone surveillée, ou une analyse de certaines caractéristiques du signal reçu dans un secteur donné défini par des valeurs de distance, de vitesse et d'azimut; les données élaborées par le radar passif (12) consécutivement à une requête étant transmises à celui ou ceux des radars actifs (11) auteurs de cette requête.

2. Système selon la revendication 1, **caractérisé en ce que** te radar passif (12) comporte des moyens pour gérer la mise en oeuvre au cours du temps des deux modes de fonctionnement alternatifs, le passage du mode "veille" au mode "fourniture de données à la demande" étant induit par la transmission d'une requête de données par un des radars actifs, et par la nature et le degré de priorité de la requête émise; le mode "veille" constituant le mode de fonctionnement par défaut, en l'absence de requête, du radar passif (12).

3. Système selon l'une des revendications 1 ou 2, **caractérisé en ce que** le radar passif (12) comporte des moyens pour réaliser un ordonnancement temporel optimal (22) des opérations correspondant aux requêtes transmises par les radars actifs (11).

4. Système selon l'une des revendications 1 ou 2, **caractérisé en ce que** chaque radar actif (11) comporte des moyens pour déterminer, compte tenu de l'instant optimal d'exécution de la tâche objet d'une requête transmise au radar passif (12), la durée du préavis nécessaire qui doit accompagner la transmission de la requête pour que le radar passif (12) puisse exécuter la tâche demandée à l'instant optimal, la durée du préavis prenant en compte le temps nécessaire pour transmettre la requête compte tenu de la nature des moyens de communication qui relie le radar passif (12) aux radars actifs (11).

5. Système selon l'une quelconque des revendications précédentes, **caractérisé en ce que** l'ensemble des radars (11, 12) formant le système comporte des moyens pour prendre en compte une date et une référence de temps communes.

6. Système selon l'une quelconque des revendications précédentes, **caractérisé en ce que** les requêtes transmises par un radar actif (11), sont de deux types:
les requêtes de recherche, requérant la recherche par le radar passif (12) de nouvelles cibles dans un secteur donné répondant à des critères donnés de position et de vitesse;
les requêtes d'analyse, requérant la mesure par le radar passif (12) de grandeurs particulières, dans un domaine spatial restreint défini par une position centrale accompagnée de l'incertitude sur cette position, ainsi que par une étendue selon les différentes directions de l'espace;
les requêtes transmises étant accompagnées de l'instant pour lequel la tâche demandée doit être réalisée.

7. Système selon l'une quelconque des revendications précédentes, **caractérisé en ce que** le radar passif (12) est configuré pour, dans le fonctionnement en mode "veille" transmettre aux radars actifs de la coalition les informations élaborées à partir des détections opérées par ses soins.

## Patentansprüche

1. Radarüberwachungssystem des Typs mit einem passiven Radar (12), das Gelegenheitssender und mehrere aktive Radare (11) benutzt, die in Form einer Koalition (13) zusammenwirken, um die Überwachung einer Zone des Raums zu gewährleisten, wobei das passive Radar (12) und die aktiven Radare (11) Mittel zum Austauschen von Informationen (14) umfassen, **dadurch gekennzeichnet, dass** das passive Radar (12) so konfiguriert ist, dass es in zwei alternativen Betriebsarten arbeiten kann:
- einer "Wach"-Betriebsart, in der das passive Radar (12) eine Überwachung der betrachteten Zone des Raums durchführt und Erkennungsinformationen in Bezug auf die Objekte ausarbeitet, die sich in der überwachten Zone bewegen;
- einer "Datenlieferung nach Bedarf"-Betriebsart, in der das passive Radar (12) auf Anforderung von einem oder mehreren aktiven Radaren (11) eine Objektsuche in einem gegebenen Sektor der überwachten Zone durchführt oder eine Analyse von bestimmten Charakteristiken des in einem gegebenen Sektor empfangenen Signals durchführt, definiert durch Distanz-, Geschwindigkeits- und Azimutwerte; wobei die von dem passiven Radar (12) auf Anforderung hin ausgearbeiteten Daten zu dem oder denen der aktiven Radare (11) gesendet werden, von dem/denen diese Anforderung stammt.

2. System nach Anspruch 1, **dadurch gekennzeichnet, dass** das passive Radar (12) Mittel zum Verwalten der Nutzung der beiden alternativen Betriebsarten im Laufe der Zeit umfasst, wobei der Übergang von der "Wach"-Betriebsart in die "Datenlieferung nach Bedarf"-Betriebsart durch Senden einer Datenanforderung durch eines der aktiven Radare und durch die Natur und den Prioritätsgrad der gesendeten Anforderung induziert wird; wobei die "Wach"-Betriebsart bei fehlender Anforderung die vorgabemäßige Betriebsart des passiven Radars (12) ist.

3. System nach Anspruch 1 oder 2, **dadurch gekennzeichnet, dass** das passive Radar (12) Mittel für eine optimale Zeitplanung (22) von Operationen umfasst, die den von den aktiven Radaren (11) gesendeten Anforderungen entsprechen.

4. System nach Anspruch 1 oder 2, **dadurch gekennzeichnet, dass** jedes aktive Radar (11) Mittel umfasst, um unter Berücksichtigung des optimalen Ausführungszeitpunkts der Aufgabe, die bei dem passiven Radar (12) angefordert wurde, den notwendigen Vorlauf zu ermitteln, der in der Sendung der Anforderung enthalten sein muss, damit das passive Radar (12) die angeforderte Aufgabe zum optimalen Zeitpunkt ausführen kann, wobei der Vorlauf die Zeit berücksichtigt, die zum Senden der Anforderung unter Berücksichtigung der Natur der Kommunikationsmittel notwendig ist, die das passive Radar (12) mit den aktiven Radaren (11) verbinden.

5. System nach einem der vorherigen Ansprüche, **dadurch gekennzeichnet, dass** der das System bildende Satz von Radaren (11, 12) Mittel zum Berücksichtigen eines/einer gemeinsamen Datums und Referenzzeit umfasst.

6. System nach einem der vorherigen Ansprüche, **dadurch gekennzeichnet, dass** die von einem aktiven Radar (11) gesendeten Anforderungen von zwei Typen sind:
Suchanforderungen, die die Suche nach neuen Zielen in einem gegebenen Sektor durch das passive Radar (12) als Reaktion auf gegebene Positions- und Geschwindigkeitskriterien verlangen;
Analyseanforderungen, die die Messung bestimmter Größen durch das passive Radar (12) verlangen, in einem eingeschränkten räumlichen Bereich, der durch eine zentrale Position, in Verbindung mit der Unsicherheit an dieser Position, sowie durch eine Erweiterung in den verschiedenen Richtungen des Raums definiert wird;
wobei die gesendeten Anforderungen den Zeitpunkt beinhalten, für den die angeforderte Aufgabe ausgeführt werden muss.

7. System nach einem der vorherigen Ansprüche, **dadurch gekennzeichnet, dass** das passive Radar (12) so konfiguriert ist, dass es in der "Wach"-Betriebsart die Informationen, die auf der Basis der von ihm gemachten Erkennungen ausgearbeitet wurden, zu den aktiven Radaren der Koalition sendet.

## Claims

1. A radar surveillance system of the type including a passive radar (12) using opportunistic transmitters and a plurality of active radars (11) that cooperate in the form of a coalition (13) to assure the surveillance of an area of space, the passive radar (12) and the active radars (11) including means (14) for exchanging information, **characterized in that** the passive radar (12) is configured to adopt two alternate operating modes:
- a "watching" mode in which the passive radar (12) carries out surveillance of the area of space concerned and generates detection information relating to objects in the area under surveillance, and
- an "on-demand data feed" mode in which the passive radar (12) executes at the request of one or more active radars (11) an object search in a given sector of the area under surveillance or an analysis of certain characteristics of the signal received in a given sector defined by distance, speed and azimuth values, the data generated by the passive radar (12) following a request being transmitted to the active radar or radars (11) authoring that request.

2. The system as claimed in claim 1, **characterized in that** the passive radar (12) includes means configured to manage the use over time of the two alternate operating modes, the change from the "watching" mode to the "on-demand data feed" mode being induced by the transmission of a data request by one of the active radars and by the nature and the degree of priority of the request sent, the "watching" mode constituting the default operating mode of the passive radar (12) in the absence of any request.

3. The system as claimed in either of claims 1 or 2, **characterized in that** the passive radar (12) includes means (22) for optimal temporal scheduling of operations corresponding to requests transmitted by the active radars (11).

4. The system as claimed in claim 1 or claim 2, **characterized in that** each active radar (11) includes means for determining, given the optimum time for execution of the task that is the subject of a request transmitted to the passive radar (12), the duration of the necessary notice that must accompany the transmission of the request so that the passive radar (12) is able to execute the requested task at the optimum time, the duration of the notice taking into account the time necessary for transmitting the request given the nature of the communication means that link the passive radar (12) to the active radars (11).

5. The system as claimed in any one of the preceding claims, **characterized in that** all radars (11, 12) forming the system includes means for taking into account a date and time and a time reference that are common.

6. The system as claimed in any one of the preceding claims, **characterized in that** the requests transmitted by an active radar (11) are of two types:
search requests, requesting a search by the passive radar (12) for new targets in a given sector satisfying given position and speed criteria, and
analysis requests, requesting measurement by the passive radar (12) of particular magnitudes in a restricted spatial domain defined by a central position accompanied by the uncertainty on that position, as well as by an extent in the various directions in space;
the requests transmitted being accompanied by the time for which the requested task must be carried out.

7. The system as claimed in any one of the preceding claims, **characterized in that** the passive radar (12) is configured, when operating in the "watching" mode, to transmit to the active radars of the coalition information generated from its detections.
